(19) Europäisches Patentamt
European Patent Office
Office européen des brevets

(11) EP 0 831 112 B1

(12) EUROPEAN PATENT SPECIFICATION

(45) Date of publication and mention of the grant of the patent:
**26.11.2003 Bulletin 2003/48**

(51) Int Cl.[7]: **C08G 83/00**, C08G 77/52

(21) Application number: **97306949.5**

(22) Date of filing: **08.09.1997**

# (54) Sheet and tube organosilicon polymers

Schicht- und rohrförmige Siloxanpolymere

Polymères de siloxane en feuille et tubulaire

(84) Designated Contracting States:
**DE FR GB**

(30) Priority: **19.09.1996 US 710700**

(43) Date of publication of application:
**25.03.1998 Bulletin 1998/13**

(73) Proprietors:
- **DOW CORNING CORPORATION Midland, Michigan 48686-0994 (US)**
- **CASE WESTERN RESERVE UNIVERSITY Cleveland, OH 44106-7080 (US)**

(72) Inventors:
- **Chen, Chenggang Cleveland, Ohio 44106 (US)**
- **Katsoulis, Dimitris Elias Midland, Michigan 48640 (US)**
- **Kenny, Malcolm Edward Cleveland Heights, Ohio 44118 (US)**

(74) Representative: **Kyle, Diana et al
Elkington & Fife
Prospect House
8 Pembroke Road
Sevenoaks Kent TN13 1XR (GB)**

(56) References cited:
**DE-A- 2 144 090**
**US-A- 3 661 846**
**US-A- 4 472 538**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 831 112 B1

Printed by Jouve, 75001 PARIS (FR)

## Description

This invention is directed to silicone compounds, and methods of making silicate-based sheet or tube type siloxane polymers.

Silicones are made from silica by reduction in an electric furnace to elemental silicon, i.e.,

$$SiO_2 + 2\ C \rightarrow Si + 2\ CO.$$

The elemental silicon is thereafter treated with RCl, typically methyl chloride, in the "Direct Process", at commercial scale production levels, i.e.,

$$Si + 2\ RCl \rightarrow R_2SiCl_2.$$

Hydrolysis of the resulting organochlorosilanes then gives siloxanes which are used in the manufacture of many silicone products, i.e.,

$$nMe_2SiCl_2 + 2nH_2O \rightarrow nMe_2Si(OH)_2 + 2nHCl$$

$$n[Me_2Si(OH)_2] \rightarrow HO(Me_2SiO)_nH + (n\text{-}1)H_2O$$

Alternative routes to silicones, involving the preparation of silicone polymers from silicate materials, are taught in US Patent 3,661,846. Another unique approach along this line is taught in our US Patent 5,605,982 for the manufacture of silicones. This invention is a modification of the process generally described in the latter patent.

Thus, according to the US Patent 5,605,982, sheet or tube silicates are reacted with an alkenyl group containing chlorosilane to produce an alkenylsiloxy polymer. The alkenylsiloxy polymer is then further reacted with a hydrosilane in the presence of a platinum catalyst to produce an organopolysiloxane polymer.

In this invention, however, sheet or tube silicates are reacted with an organo-H-chlorosilane to produce an organosiloxane polymer with pendent ≡Si-H groups. The organosiloxane polymer with pendent ≡Si-H groups is next reacted with an olefin, diolefin or cycloolefin in the presence of a platinum catalyst to produce organopolysiloxane polymer.

In our latter patent, four of the four reactants contain the silicon atom. In the present invention, only three of the four reactants contain that atom.

Thus, the term hydrosilation applies to the addition of Si-H across any unsaturated species, i.e.

$$\equiv SiH + CH_2{=}CH(R)_nSi\equiv\ \rightarrow\ \equiv Si\text{-}CH_2CH_2\text{-}R_n\text{-}Si\equiv \qquad (I)$$

or

$$\equiv SiH + CH_2{=}CHR \rightarrow\ \equiv Si\text{-}CH_2CH_2\text{-}R \qquad (II).$$

Silanes and siloxanes that contain a silicon bound hydrogen atom can add across the double bond. Typically, these reactions are conducted in the presence of a platinum catalyst or a catalyst which is a complex of platinum. Scenario (I) corresponds generally to the process in US Patent 5,605,982, whereas Scenario (II) corresponds generally to the process of our present invention.

One object of this invention is to provide new, simple, and versatile routes, to siloxane polymers having segments derived from silicate structures by using readily accessible starting materials that give nontoxic byproducts. Another object is to prepare distinctively shaped organosiloxanes which are useful as additives in amorphous silicone materials, such as resins, fluids and gums. They can be used to create *supramolecular* structures offering benefits in gels, cosmetics, greases, elastomers, sealants and high temperature polymers. In addition, they can be used in catalytic systems and membrane separation processes. They may also be used as rheological additives, fire resistance polymers, molecular reinforcing agents, and for imparting barrier or thixotropic properties.

Our invention relates to the synthesis, characterization and utilization of certain organofunctional sheet or tube siloxane polymers. These polymers are derived from naturally occurring and synthetic sheet or tube silicates by a two-step process taught herein.

The first step consists of the reaction of an organo-H-chlorosilane, with a sheet or tube silicate, to produce a sheet or tube-like organosiloxane polymer that contains pendent ≡Si-H groups. Most preferred are organo-H-chlorosilanes with the formula (H)RR'SiCl or $(H)RSiCl_2$ where R and R' are alkyl or aryl groups. The sheet silicate mineral is the mineral apophyllite, $KCa_4Si_8O_{20}(OH,F)\cdot 8H_2O$, and the tube silicate is the synthetic silicate $K_2CuSi_4O_{10}$. Other natural and synthetic layered or tube silicates can also be used herein, such as magadiite, $Na_2Si_{14}O_{29}\cdot xH_2O$; kenyaite, $Na_2Si_{22}O_{45}\cdot xH_2O$; silinaite, $NaLiSi_2O_5\cdot 2H_2O$ or chrysotile, $Mg_3(OH)_4Si_2O_5$.

The sheet silicate apophyllite $KCa_4Si_8O_{20}(OH,F)\cdot 8H_2O$ and other of such silicates, are commercially available and obtainable from supply houses such as Ward's Natural Science Establishment, Rochester, New York. Methods of preparing the tube silicate $K_2CuSi_4O_{10}$ are described in various publications including US Patent 4,942,026; *J.Polym. Prepr*. (Am.Chem.Soc., Div.Polym.Chem.) 1991, 32(3), 508-509; and *Colloids and Surfaces,* 1992, 63, 139-149.

Our second step involves the controlled reaction of the ≡SiH groups of the polymer with an olefin, diolefin or cycloolefin via a hydrosilation reaction to produce another sheet or tube organosiloxane polymer. The intermediate and final layer polymers have an increased inter-layer spacing over that of their starting minerals. The magnitude of this spacing depends partly upon the size of the organo-H-chlorosilane and olefin, diolefin or cycloolefin reactants. For example, apophyllite has an inter-layer spacing of 0.79 nm (7.9 Å); the intermediate hydridophenylmethylsiloxy-apophyllite sheet polymer has an inter-layer spacing of 1.67 nm (16.7 Å), based on powder X-ray diffractometry (XRD) data, and the final n-octylphenylmethylsiloxy-apophyllite polymer derived from reaction of the intermediate with 1-octene has an inter-layer spacing of 2.08 nm (20.8 Å).

Hydrosilation reactions described herein are heterogeneous processes that take place on the surface of the intermediate layered hydrido-organofunctional siloxanes, and on the surface of the intermediate tube siloxanes. They represent a new approach for production of supramolecular structures. The large number of olefin, diolefin or cycloolefin starting materials available for reaction enables the tailoring of numerous new sheet and tube polymers.

Ideally, equivalent amounts of the organosiloxane with pendent ≡Si-H groups and olefin, diolefin or cycloolefin are employed in our process, and one ethylenic linkage is the theoretical equivalent of one silicon bonded hydrogen atom. It may be necessary, however, to use an excess of this former reactant with the alkenyl or alkenylene group to totally consume the pendent ≡SiH groups of the organosiloxane polymer.

The maximum amount of platinum catalyst employed is determined by economical considerations, and the minimum amount is controlled by the type and purity of reactants employed. Very low concentrations of platinum catalyst, such as $1 \times 10^{-10}$ moles of catalyst per equivalent of the olefin, diolefin or cycloolefin, are used when the reactants are extremely pure. However, it is possible to use $1 \times 10^{-8}$ moles of catalyst per equivalent weight of the reactant with pendent ≡SiH groups or even $1 \times 10^{-7}$ to $5 \times 10^{-2}$ moles of catalyst, per equivalent weight of said reactant with pendent ≡SiH groups.

"Moles" of platinum catalyst are measured in terms of one mole providing one unit atom (i.e., one gram atom) of platinum. An "equivalent weight" of olefin, diolefin or cycloolefin is the amount of reactant furnishing one unit weight of ethylenic unsaturation (i.e. equivalent to one unit weight of ≡Si-H), regardless of what other reactive, or potentially reactive substitutents, are present. Thus, an equivalent weight of ethylene is its exact molecular weight.

The preferred hydrosilation catalyst is the platinum complex chloroplatinic acid $H_2PtCl_6\cdot xH_2O$ which is commercially available from Aldrich Chemical Company, Inc., Milwaukee, Wisconsin. Other platinum-based catalysts can be employed, however, such as platinum supported on active carbon particles having a diameter of 1-2 mm. The amount of platinum supported on active carbon can vary from 0.1-5 % by weight, based on the total weight of active carbon. This supported catalyst can also be dried so that it is anhydrous. Other platinum complexes, such as platinum acetylacetonate or chloroplatinic acid complexed with divinyltetramethyldisiloxane and diluted in dimethylvinylsiloxy endblocked polydimethylsiloxane, can also be used. Typical hydrosilation catalysts for successful use herein may be found in US Patents 2,823,218; 3,419,359; 3,419,593; 3,445,420; 3,697,473; 3,814,731; 3,890,359 and 4,123,604.

The reaction temperature can vary, and optimum temperatures depend upon the concentration of platinum catalyst, or the nature of the reactants. The reaction can be initiated at a temperature below room temperature (0 to -10°C.). The maximum temperature is usually determined by the stability of the reactants. Ordinarily, it is best to keep the reaction temperature below 300°C. Best results with most reactants are obtained at 60-180°C. Heat generated by the reaction may raise the temperature up to 200-250°C. for a short time, however.

The optimum reaction time is a variable depending upon the reactants, reaction temperature, and platinum catalyst concentration. Ordinarily, there is no benefit in extending the contact time of the reactants beyond 36 hours, but likewise there is usually no harm, unless an extremely elevated temperature is employed. With many reactants, a practical yield of product is obtained in 3-4 hours.

The reaction can be carried out at atmospheric, sub-atmospheric, or super-atmospheric pressure. Here again, the choice of conditions is largely a matter of logic, based upon the nature of the reactants, and the equipment available.

Non-volatile reactants are especially adaptable to being heated at atmospheric pressure, with or without a reflux arrangement. Reactants which are gaseous at ordinary temperatures, are preferably reacted at substantially constant volume under autogenous or induced pressure.

The olefin, diolefin or cycloolefin is either an olefin (alkene) or a diolefin (alkadiene). It can have a straight chain, a branched chain or the form of a closed ring (cyclic). The double bond can be on the first carbon atom, or it can be on other carbon atoms in the chain. Most preferred, however, are alpha-olefins and alpha omega-dienes, because of their ease of reactivity.

Alpha-olefins ($CH_2$=CHR) useable in our method include alkenes with 2-30 carbon atoms, preferably 6-30 carbon atoms, and most preferably 6-18 carbon atoms. Suitable alpha-olefins are ethene, propene, 1-butene, isobutylene (2-methylpropene), 1-pentene (C5), 2-methyl-1-butene, 3-methyl-1-butene, 1-hexene, 2-methyl-1-pentene, 3-methyl-1-pentene, 4-methyl-1-pentene, 1-heptene, 2-methyl-1-hexene, 1-octene, 2-methyl-1-heptene, 1-nonene, 1-decene (C10), 1-undecene, 1-dodecene, 1-tridecene, 1-tetradecene, 1-pentadecene (C15), 1-hexadecene, 1-octadecene, 1-nonadecene, 1-eicosene (C20), and those alpha-olefin fractions containing varying percentages of C22-C30+ alpha-olefins sold under the trademarks GULFTENE® 24-28 and GULFTENE® 30+, by Chevron Chemical Company, Houston, Texas.

Useful alpha omega-dienes include compounds of the formula $CH_2=CH(CH_2)_xCH=CH_2$ where x is 0-20, such as 1,3-butadiene; 1,4-pentadiene; 1,5-hexadiene; 1,6-heptadiene; 1,7-octadiene; 1,8-nonadiene; 1,9-decadiene; 1,11-dodecadiene; 1,13-tetradecadiene and 1,19-eicosadiene.

Successful cycloolefins used herein include cyclopropene, cyclobutene, cyclopentene, cyclohexene, cyclopentadiene ($C_5H_6$) and cyclooctatetraene ($C_8H_8$).

Other olefins, diolefins or cycloolefins that are useful herein include 2-methyl-2-butene, isoprene, unsymmethylethylethylene, 2-pentene, 2-hexene, 2,5-dimethyl-2-hexene and 5,5-dimethyl-2-hexene. The alkenyl group can also be coupled with an aromatic nucleus; and therefore, it is possible to use compounds such as styrene, divinylbenzene, allylbenzene and 1-phenylbutadiene, if desired.

Our organo-H-chlorosilane herein has the formula:

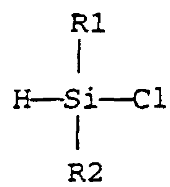

where R1 and R2 are an alkyl group or an aryl group such as phenyl. Examples of suitable organo-H-chlorosilanes are:

| | |
|---|---|
| di-*t*-butylchlorosilane | $(CH_3)_3CHSiCl$ |
| diethylchlorosilane | $(C_2H_5)_2HSiCl$ |
| diisopropylchlorosilane | $[(CH_3)_2CH]_2HSiCl$ |
| dimethylchlorosilane | $(CH_3)_2HSiCl$ |
| diphenylchlorosilane | $(C_6H_5)_2HSiCl$ |
| methylethylchlorosilane | $(CH_3)(C_2H_5)HSiCl$, and |
| phenylmethylchlorosilane | $(C_6H_5)(CH_3)HSiCl$. |

Our organo-H-chlorosilane may also have the - formula:

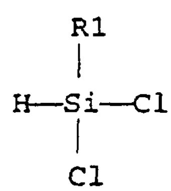

where R1 is an alkyl group or an aryl group such as phenyl. Examples of suitable organo-H-chlorosilanes of this type are:

| | |
|---|---|
| amyldichlorosilane | $(C_5H_{11})HSiCl_2$ |
| ethyldichlorosilane | $CH_3CH_2HSiCl_2$ |
| hexadecyldichlorosilane | *n*-$C_{16}H_{33}HSiCl_2$ |
| hexyldichlorosilane | $CH_3(CH_2)_5HSiCl_2$ |
| isobutyldichlorosilane | i-$C_4H_9HSiCl_2$ |
| methyldichlorosilane | $CH_3HSiCl_2$ |
| phenyldichlorosilane | $C_6H_5HSiCl_2$ and |
| *n* -propyldichlorosilane | *n*-$C_3H_7HSiCl_2$ . |

The following examples illustrate our invention in more detail. In particular, Example I provides the synthesis of an apophyllite-derived hydrodimethylsiloxy sheet polymer. Example II shows the synthesis of an apophyllite-derived hydrodiisopropylsiloxy sheet polymer. These polymers are useful to hydrosilylate alkenes, which will be shown in later examples.

In our examples, the polymers were characterized by Fourier Transform infrared spectroscopy (FTIR) and powder X-ray diffractomery (XRD).

EXAMPLE I

Synthesis of Apophyllite-Derived Hydridodimethylsiloxy Sheet Polymer $[(H(CH_3)_2SiO)_x((HO)_{1-x}SiO_{3/2}]_n$

A suspension of apophyllite [Poona, India, 0.125 mm (120 mesh), 500 mg, 0.542 mmole], dimethylchlorosilane (5.0 ml, 0.046 mole), and dimethylformamide (DMF, 12 ml) was refluxed for 12 hours. Additional dimethylchlorosilane was added (3.0 ml, 0.028 mole), and the mixture was refluxed for another 12 hours. Finally, still more dimethylchlorosilane (3.0 ml, 0.028 mole) was added, and the mixture was refluxed for a further 12 hours. The resultant product was filtered and then washed with acetone, a solution of water and acetone (1:1), and acetone, and afterward dried at 60°C. and 8 kPa (60 torr) for 12 hours. The product had the following XRD pattern, (d(Å)($I/I_0$)): 13.1 (57.6), 7.68 (37.2), 4.71 (17.6), 4.54 (47.6), 3.95 (100), 3.57 (25.5), 3.35 (17.1), 3.16 (21.1), 2.98 (97.8), 2.62 (22.2), 2.48 (38.2), 2.43 (15.9), 2.19 (13.2), 2.10 (14.5), 2.00 (8.4), 1.76 (15.1), 1.58 (33.3) 1.53 (5.9), 1.49 (9.6), 1.42 (7.7), 1.36 (6.8). The following is the product infrared spectrum (IR), (Fluorolube, Nujol mulls, $cm^{-1}$): 3554 (s, free OH stretch), 3324 (w br, H-bonded OH stretch), 2966 (m, CH stretch), 2146 (m, SiH stretch), 1064 (s, SiO stretch). The product was a white solid. It dispersed, but did not dissolve, in hexane and toluene. It was very hydrophobic and did not mix with or disperse in water.

In this procedure, the reaction temperature was held to a low value (50°C.) by the low boiling point of the chlorosilane used, i.e., 36°C. To compensate, a long reaction time was used. The product of this procedure gave an infrared spectrum showing both CH and SiH bands. The presence of these bands suggests that the product contained the desired polymer. The product gave an XRD pattern showing a moderately strong line at 1.31 nm (13.1 Å), and a series of lines at positions near those expected for apophyllite. The 1.31 nm (13.1 Å) line is in the range expected for an apophyllite-derived polymer of this general type, i.e., an apophyllite-derived trimethylsiloxy sheet polymer gives a line at 1.5 nm (15.0 Å). The existence of this line suggests that the product contained the desired polymer. The insolubility of the polymer is expected, as analogous alkyl and alkenyl sheet polymers are also insoluble. The reaction conducted in this example is represented as:

$$KCa_4Si_8O_{20}(OH,F)\cdot 8H_2O + H(CH_3)_2SiCl \rightarrow$$

$$[(H(CH_3)_2SiO)_x(HO)_{1-x}SiO_{3/2}]_n$$

EXAMPLE II

Synthesis of Apophyllite-Derived Hydridodiisopropylsiloxy Sheet Polymer $[(H((CH_3)_2CH)_2SiO)_x(HO)_{1-x}SiO_{3/2}]_n$

A suspension of apophyllite [0.125 mm (120 mesh), 800 mg, 0.867 mmole], diisopropylchlorosilane (10 ml, 0.058 mole), and dimethylformamide (15 ml) was heated (110°C.) with stirring for 10 hours. The resultant material was filtered and next washed with acetone, a solution of water and acetone, and acetone, and then dried at 60°C. and 8 kPa (60 torr) for 12 hours. XRD (d(Å) ($I/I_0$)): 17.1 (100). IR (Fluorolube, Nujol mulls, $cm^{-1}$): 3554 (vw, free OH stretch), 3422 (w br, H-bonded OH stretch), 2946 (m, CH stretch), 2868 (m, CH stretch), 2126 (m, SiH stretch) , 1062 (s, SiO

stretch). The product was a white solid. It dispersed, but did not dissolve, in hexane and toluene. It was hydrophobic and did not mix with or disperse in water.

This procedure is similar to that used for its dimethyl analogue in Example I. However, in this example, the reaction temperature (110°C.) was not unduly restricted by the boiling point of the chlorosilane used, i.e., 137°C. The product of this example gave an infrared spectrum showing both CH and SiH bands. The presence of these bands suggests that the product was the desired polymer. The product gave an X-ray powder pattern showing as its only significant line, a line at 1.71 nm (17.1 Å). This line is in the range expected for the desired polymer, and its presence indicates that the product was the desired polymer. The intensity and narrowness of this line provides strong evidence indicating that the polymer was composed of flat sheets which were stacked with a regular spacing. On the basis of the known structure of the sheet in apophyllite, these sheets are believed to be composed of fused 8-membered and 16-membered rings. The lack of additional significant lines in the XRD pattern of the polymer, indicates that the sheets were not in registry. Again, the insolubility of the polymer is as expected. The reaction of this example is represented as:

$$KCa_4Si_8O_{20}(OH,F)\cdot 8H_2O + H[(CH_3)_2CH]_2SiCl \rightarrow$$

$$[(H((CH_3)_2CH)_2SiO)_x(HO)_{1-x}SiO_{3/2}]_n$$

As noted above, polymers prepared according to Examples I and II are able to hydrosilylate alkenes. Because there are many alkenes, it follows that many sheet polymers tailored to specific property profiles can be made from such materials.

The following additional examples are directed to the synthesis of a hydridophenylmethylsiloxy sheet polymer derived from apophyllite (EXAMPLE III), and the synthesis of an *n*-octylphenylmethylsiloxy sheet polymer derived from the the product of EXAMPLE III, by hydrosilylation (EXAMPLE VI). Other hydrosilylations using the polymers prepared by EXAMPLES I and II are also shown, i.e., EXAMPLES IV and V. The routes to these polymers are significant, as they illustrate new and flexible routes to siloxy sheet and tube polymers.

## EXAMPLE III

Synthesis of Hydridophenylmethylsiloxy Sheet Polymer Derived from Apophyllite $[((H)(C_6H_5)(CH_3)SiO)_x(HO)_{1-x}SiO_{3/2}]_n$

A suspension of apophyllite [125 mm (120 mesh), 2.40 g, 2.60 mmole], phenylmethylchlorosilane (15.0 g, 95.7 mmole) and dimethylformamide (100 ml) was heated (140°C.) with stirring for 19 hours and filtered. The solid was washed with acetone, a solution of water and acetone (1:1), and acetone and subsequently dried at 60°C. and 8 kPa (60 torr) for 12 hours. The product weighed 2.64 g. XRD (d(Å) ($I/I_0$)): 16.7 (100). IR (Fluorolube, Nujol mulls, $cm^{-1}$): 3552 (w, free OH stretch), 3388 (w br, H-bonded OH stretch), 3072 (w, C=C-H stretch), 3050 (w, C=C-H stretch), 2964 (w, CH stretch), 2152 (m, SiH stretch), 1062 (vs br, SiO stretch). The polymer prepared in this example was a white solid. It dispersed, but did not dissolve, in hexane and toluene. It was hydrophobic and did not mix with or disperse in water.

This route for synthesis is the same as that used for EXAMPLE I and EXAMPLE II analogues. However, in contrast to the dimethyl polymer reaction in EXAMPLE I, the reaction temperature (140°C.) in this example was not unduly restricted by the boiling point of the chlorosilane used, [113°C. and 13.3 kPa (100 torr)] and was within the range desired. The product of this example gave an infrared spectrum showing both CH and SiH bands. The presence of these bands suggests that the product was the desired polymer. This product gave an XRD pattern showing as its only significant line, a line at 1.67 nm (16.7 Å). This line is in the range expected, and its presence indicates that the product was the desired polymer. The intensity and narrowness of this line provides strong evidence indicating that the polymer was composed of flat sheets which were stacked with regular spacing. The lack of additional significant lines in the XRD pattern of the polymer indicates that the sheets were not in registry. The insolubility of the polymer is expected. The reaction of this example is represented as:

$$KCa_4Si_8O_{20}(OH,F)\cdot 8H_2O + (H)(C_6H_5)(CH_3)SiCl \rightarrow$$

$$[((H)(C_6H_5)(CH_3)SiO)_x(HO)_{1-x}SiO_{3/2}]_n$$

EXAMPLE IV

Preparation of *n*-Hexyldiisopropylsiloxy Sheet Polymer Derived from Hydridodiisopropylsiloxy Sheet polymer $[((n\text{-}C_6H_{13})((CH_3)_2CH)_2SiO)_x(HO)_{1-x}SiO_{3/2}]_n$

In another experiment, the hydridodiisopropylsiloxy polymer prepared in EXAMPLE II was heated with 1-hexene in the presence of $H_2PtCl_6 \cdot xH_2O$ catalyst. The product gave a XRD pattern with a line at 1.84 nm (18.4 Å). While the main line in this pattern is at 1.84 nm (18.4 Å), the main line in the pattern of the parent hydridodiisopropylsiloxy polymer in EXAMPLE II is at 1.71 nm (17.1 Å). The 0.13 nm (1.3 Å) difference in positions is sufficiently large to indicate that hydrosilylation of the parent hydridodiisopropylsiloxy polymer in EXAMPLE II took place.

EXAMPLE V

Preparation of *n*-Hexyldimethylsiloxy Sheet Polymer Derived from Hydridodimethylsiloxy Sheet Polymer $[((n\text{-}C_6H_{13})(CH_3)_2SiO)_x(HO)_{1-x}SiO_{3/2}]_n$

In another experiment, the hydridodimethylsiloxy polymer of EXAMPLE I was heated with 1-hexene in the presence of $H_2PtCl_6 \cdot xH_2O$ catalyst. The product gave a XRD pattern with a line at 1.63 nm (16.3 Å). While the main low-angle line in the pattern of this product is at 1.63 nm (16.3 Å), the corresponding line in the parent hydridodimethylsiloxy polymer of EXAMPLE I is at 1.31 nm (13.1 Å). The 0.32 nm (3.2 Å) difference in the positions of these lines indicates the occurrence of substantial hydrosilylation of the parent hydridodimethylsiloxy polymer in EXAMPLE I.

EXAMPLE VI

Preparation of *n*-Octylphenylmethylsiloxy Sheet Polymer Derived from Hydridodimethylsiloxy Sheet Polymer $[((n\text{-}C_8H_{17})(C_6H_5)(CH_3)SiO)_x(HO)_{1-x}SiO_{3/2}]_n$

A mixture of the hydridophenylmethylsiloxy sheet polymer prepared in EXAMPLE III (0.42 g, 3.3 mmole, assuming a 50% level of substitution), 1-octene (9.0 ml, 57 mmole), and a solution of platinum divinyltetramethyldisiloxane complex in xylene (2-3% platinum, 0.4 ml) was heated (120°C.) with stirring for 26 hours and filtered. The solid was washed with acetone, ethanol, a solution of water and acetone (1:1), and acetone. Then it was dried at 60°C. and 8 kPa (60 torr) for 12 hours and weighed at 0.43 g. XRD (d(Å)($I/I_0$)): 20.8 (100). IR (Fluorolube, Nujol mulls, $cm^{-1}$): 3552 (m, free OH stretch), 3390 (vw br, H-bonded OH stretch), 3072 (w, C=C-H stretch), 3050 (w, C=C-H stretch), 2958 (m, CH stretch), 2926 (m, CH stretch), 2854 (m, CH stretch), 1198 (vs, SiO stretch), 1126 (vs, SiO stretch), 1042 (m). This product was a gray solid. It dispersed, but did not dissolve, in hexane and toluene. It was hydrophobic and did not mix with or disperse in water. The XRD pattern and infrared spectrum of this product showed that it was the desired polymer. The intensity and narrowness of the main line at 2.08 nm (20.8 Å) in the pattern indicated that the sheets of the polymer were quite flat and quite regularly stacked. In this example, a relatively high reaction temperature was permitted by the boiling point of 1-octene (122°C). The catalyst in this example was platinum divinyltetramethyldisiloxane. The reaction conducted in this example is represented as:

$$[((H)(C_6H_5)(CH_3)SiO)_x(HO)_{1-x}SiO_{1.5}]_n + CH_2{=}CH(CH_2)_5CH_3 \rightarrow$$

$$[((n\text{-}C_8H_{17})(C_6H_5)(CH_3)SiO)_x(HO)_{1-x}SiO_{3/2}]_n.$$

A method for preparing the tube silicate $K_2CuSi_4O_{10}$ is taught in US Patent 4,942,026. The following example shows an alternative method for preparing said tube silicate, which method is also described in US Patent 5,605,982.

EXAMPLE VII

Preparation of $K_2CuSi_4O_{10}$

This procedure was patterned after the procedure of US 4,942,026. In succession, a solution of KOAc (15.8 g, 161 mmole) and $H_2O$ (160 ml), $Si(OC_2H_5)_4$ (66.7 g, 320 mmole), and $NH_4OH$ (30 wt%, 2.0 ml, 51 mmole) were added to a stirred mixture of $Cu(OAc)_2 \cdot H_2O$ (16.1 g, 80.6 mmole) and ethanol (320 ml) which was maintained at 40°C. (oil bath). The resulting mixture was stirred at room temperature for 3 days, allowed to stand for 2 days, and evaporated to dryness with a rotary evaporator at 10.6 kPa (80 torr) and 70°C. The solid was further dried at 10.6 kPa (80 torr)

and 90°C. for 24 hours, ground to a powder, heated (Pt crucible, 200°C.) under a slow flow of air (100 ml/min) for 24 hours, further heated (Pt crucible, 590°C.) under a slow flow of air (100 ml/min) for 19 hours, pelletized and subsequently heated (Pt crucible, 750°C.) under a slow flow of $N_2$ (100 ml/min) for 7 days. The composition of the resultant material was verified by comparison of its XRD pattern with literature data (30.0 g, 72.4 mmole, 91 % based on $Si(OC_2H_5)_4$). XRD (d(Å) (I/Io)): 3.22 (100), 4.12 (53), 3.07 (42), 3.36 (41), 2.67 (29). The compound was a bluish-purple solid.

## Claims

**1.** A method of making an organopolysiloxane sheet or tube polymer comprising contacting a sheet or tube silicate with an organo-H-chlorosilane to form an organosiloxane sheet or tube polymer with pendent ≡Si-H groups, and subsequently reacting said organosiloxane sheet or tube polymer with pendent ≡Si-H groups with an olefin, diolefin or cycloolefin in the presence of a hydrosilation catalyst, in an amount effective to catalyze a hydrosilation reaction between the alkenyl or alkenyline group of the olefin, diolefin or cycloolefin and the hydride functionality of the organosiloxane sheet or tube polymer with pendent ≡Si-H groups, to form said organopolysiloxane sheet or tube polymer.

**2.** A method according to claim 1 in which the sheet silicate is apophyllite $KCa_4Si_8O_{20}(OH,F)\cdot 8H_2O$ and the tube silicate is $K_2CuSi_4O_{10}$.

**3.** A method according to claim 1 in which the sheet silicate is selected from the group consisting of magadiite $Na_2Si_{14}O_{29}\cdot xH_2O$, kenyaite $Na_2Si_{22}O_{45}\cdot xH_2O$, silinaite $NaLiSi_2O_5\cdot 2H_2O$, and chrysotile $Mg_3(OH)_4Si_2O_5$.

**4.** A method according to claim 1 in which the organo-H-chlorosilane is a compound having the formula

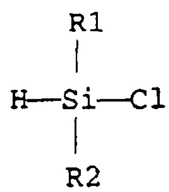

or the formula

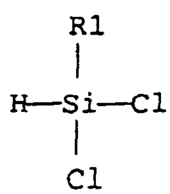

where R1 and R2 are an alkyl group or an aryl group.

**5.** A method according to claim 4 in which said compound is selected from the group consisting of

| | |
|---|---|
| di-t-butylchlorosilane | $(CH_3)_3CHSiCl$ |
| diethylchlorosilane | $(C_2H_5)_2HSiCl$ |
| diisopropylchlorosilane | $[(CH_3)_2CH]_2HSiCl$ |
| dimethylchlorosilane | $(CH_3)_2HSiCl$ |
| diphenylchlorosilane | $(C_6H_5)_2HSiCl$ |
| methylethylchlorosilane | $(CH_3)(C_2H_5)HSiCl$ |
| phenylmethylchlorosilane | $(C_6H_5)(CH_3)HSiCl$ |
| amyldichlorosilane | $(C_5H_{11})HSiCl_2$ |

(continued)

| | |
|---|---|
| ethyldichlorosilane | $CH_3CH_2HSiCl_2$ |
| hexadecyldichlorosilane | $n$-$C_{16}H_{33}HSiCl_2$ |
| hexyldichlorosilane | $CH_3(CH_2)_5HSiCl_2$ |
| isobutyldichlorosilane | i-$C_4H_9HSiCl_2$ |
| methyldichlorosilane | $CH_3HSiCl_2$ |
| phenyldichlorosilane | $C_6H_5HSiCl_2$ and |
| *n*-propyldichlorosilane | $n$-$C_3H_7HSiCl_2$. |

**6.** A method according to claim 1 in which the olefin, diolefin or cycloolefin is selected from the group consisting of ethene, propene, 1-butene, 2-methylpropene, 1-pentene, 2-methyl-1-butene, 3-methyl-1-butene, 1-hexene, 2-methyl-1-pentene, 3-methyl-1-pentene, 4-methyl-1-pentene, 1-heptene, 2-methyl-1-hexene, 1-octene, 2-methyl-1-heptene, 1-nonene, 1-decene, 1-undecene, 1-dodecene, 1-tridecene, 1-tetradecene, 1-pentadecene, 1-hexadecene,1-octadecene, 1-nonadecene, 1-eicosene, alpha-olefin fractions containing C22-C30+ alpha-olefins, 1,3-butadiene, 1,4-pentadiene, isoprene, 1,5-hexadiene, 1,6-heptadiene, 1,7-octadiene, 1,8-nonadiene, 1,9-decadiene, 1,11-dodecadiene, 1,13-tetradecadiene, 1,19-eicosadiene, cyclopropene, cyclobutene, cyclopentene, cyclohexene, cyclopentadiene $C_5H_6$, cyclooctatetraene $C_8H_8$, 2-methyl-2-butene, unsym-methylethylethylene, 2-pentene, 2-hexene, 2,5-dimethyl-2-hexene, 5,5-dimethyl-2-hexene, styrene, divinylbenzene, allylbenzene and 1-phenylbutadiene.

**7.** A method according to claim 1 in which the hydrosilation catalyst is chloroplatinic acid.

**8.** The organopolysiloxane sheet or tube polymer preparable by the method defined in any of claims 1-7.

**Patentansprüche**

**1.** Verfahren zur Herstellung eines Organopolysiloxan-Blatt- oder -Röhren-Polymers, umfassend Inberührungbringen eines Blatt- oder Röhren-Silicats mit einem Organo-H-chlorsilan, um ein Organosiloxan-Blatt- oder -Röhren-Polymer mit seitenständigen ≡Si-H-Gruppen zu bilden, und nachfolgend Umsetzen dieses Organosiloxan-Blatt- oder -Röhren-Polymers mit seitenständigen ≡Si-H-Gruppen mit einem Olefin, Diolefin oder Cycloolefin in Gegenwart eines Hydrosilylierungskatalysators in einer Menge, die wirksam ist, um eine Hydrosilylierungsreaktion zwischen der Alkenyl- oder Alkenylengruppe des Olefins, Diolefins oder Cycloolefins und der Hydridfunktionalität des Organosiloxan-Blattoder -Röhren-Polymers mit seitenständigen ≡Si-H-Gruppen zu katalysieren, um dieses Organopolysiloxan-Blatt- oder -Röhren-Polymer zu bilden.

**2.** Verfahren nach Anspruch 1, i n welchem das Blattsilicat Apophyllit $KCa_4Si_8O_{20}(OH,F){\cdot}8H_2O$ und das Röhrensilicat $K_2CuSi_4O_{10}$ ist.

**3.** Verfahren nach Anspruch 1, in welchem das Blattsilicat ausgewählt ist aus der Gruppe bestehend aus Magadiit $Na_2Si_{14}O_{29}{\cdot}xH_2O$, Kenyait $Na_2Si_{22}O_{45}{\cdot}xH_2O$, Silinait $NaLiSi_2O_5{\cdot}2H_2O$ und Chrysotil $Mg_3(OH)_4Si_2O_5$.

**4.** Verfahren nach Anspruch 1, in welchem das Organo-H-chlorsilan eine Verbindung mit der Formel

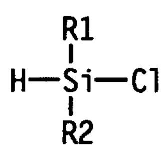

oder der Formel

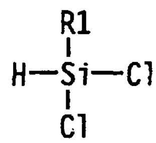

ist, worin R1 und R2 eine Alkylgruppe oder eine Arylgruppe sind.

**5.** Verfahren nach Anspruch 4, in welchem diese Verbindung ausgewählt ist aus der Gruppe bestehend aus

| | |
|---|---|
| Di-t-butylchlorsilan | $(CH_3)_3CHSiCl$, |
| Diethylchlorsilan | $(C_2H_5)_2HSiCl$, |
| Diisopropylchlorsilan | $[(CH_3)_2CH]_2HSiCl$, |
| Dimethylchlorsilan | $(CH_3)_2HSiCl$, |
| Diphenylchlorsilan | $(C_6H_5)_2HSiCl$, |
| Methylethylchlorsilan | $(CH_3)(C_2H_5)HSiCl$, |
| Phenylmethylchlorsilan | $(C_6H_5)(CH_3)HSiCl$, |
| Amyldichlorsilan | $(C_5H_{11})HSiCl_2$, |
| Ethyldichlorsilan | $CH_3CH_2HSiCl_2$, |
| Hexadecyldichlorsilan | n-$C_{16}H_{33}HSiCl_2$, |
| Hexyldichlorsilan | $CH_3(CH_2)_5HSiCl_2$, |
| Isobutyldichlorsilan | i-$C_4H_9HSiCl_2$, |
| Methyldichlorsilan | $CH_3HSiCl_2$, |
| Phenyldichlorsilan | $C_6H_5HSiCl_2$ und |
| n-Propyldichlorsilan | n-$C_3H_7HSiCl_2$. |

**6.** Verfahren nach Anspruch 1, in welchem das Olefin, Diolefin oder Cycloolefin ausgewählt ist aus der Gruppe bestehend aus Ethen, Propen, 1-Buten, 2-Methylpropen, 1-Penten, 2-Methyl-1-buten, 3-Methyl-1-buten, 1-Hexen, 2-Methyl-1-penten, 3-Methyl-1-penten, 4-Methyl-1-penten, 1-Hepten, 2-methyl-1-hexen, 1-Octen, 2-Methyl-1-hepten, 1-Nonen, 1-Decen, 1-Undecen, 1-Dodecen, 1-Tridecen, 1-Tetradecen, 1-Pentadecen, 1-Hexadecen, 1-Octadecen, 1-Nonadecen, 1-Eicosen, $\alpha$-Olefinfraktionen, die C22-C30+ $\alpha$-Olefine enthalten, 1,3-Butadien, 1,4-Pentadien, Isopren, 1,5-Hexadien, 1,6-Heptadien, 1,7-Octadien, 1,8-Nonadien, 1,9-Decadien, 1,11-Dodecadien, 1,13-Tetradecadien, 1,19-Eicosadien, Cyclopropen, Cyclobuten, Cyclopenten, Cyclohexen, Cyclopentadien $C_5H_6$, Cyclooctatetraen $C_8H_8$, 2-Methyl-2-buten, asym.-Methylethylethylen, 2-Penten, 2-Hexen, 2,5-Dimethyl-2-hexen, 5,5-Dimethyl-2-hexen, Styrol, Divinylbenzol, Allylbenzol und 1-Phenylbutadien.

**7.** Verfahren nach Anspruch 1, in welchem der Hydrosilylierungskatalysator Chloroplatinsäure ist.

**8.** Organosiloxan-Blatt- oder -Röhren-Polymer, erhältlich nach dem Verfahren, das in einem der Ansprüche 1-7 definiert ist.

## Revendications

**1.** Procédé de fabrication d'un polymère en feuille ou en tube d'organopolysiloxane comprenant la mise en contact d'un silicate en feuille ou en tube avec un organo-H-chlorosilane pour former un polymère en feuille ou en tube avec des groupes pendants ≡Si-H, et ultérieurement la réaction dudit polymère en feuille ou en tube d'organopolysiloxane avec des groupes pendants ≡Si-H avec une oléfine, une dioléfine ou une cyclooléfine en présence d'un catalyseur d'hydrosilylation, en quantité suffisante pour catalyser une réaction d'hydrosilylation entre le groupe alcényle ou alcénylène de l'oléfine, de la dioléfine ou de la cyclooléfine et la fonction hydrure du polymère en feuille ou en tube d'organopolysiloxane avec des groupes pendants ≡Si-H, pour former ledit polymère en feuille ou en tube d'organopolysiloxane.

**2.** Procédé selon la revendication 1 dans lequel le silicate en feuille est l'apophyllite $KCa_4Si_8O_{20}(OH,F)\cdot 8H_2O$ et le silicate en tube est $K_2CuSi_4O_{10}$.

**3.** Procédé selon la revendication 1 dans laquelle le silicate en feuille est choisi dans le groupe comprenant la magadiite $Na_2Si_{14}O_{29}•xH_2O$, la kenyaite $Na_2Si_{22}O_{45}•xH_2O$, la silinaïte $NaLiSi_2O_5•2H_2O$, et la chrysotile $Mg_3(OH)_4Si_2O_5$.

**4.** Procédé selon la revendication 1 dans lequel l'organo-H-chlorosilane est un composé ayant la formule :

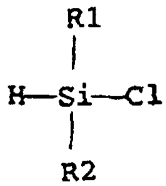

ou la formule :

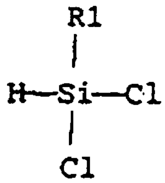

où R1 et R2 sont des groupes alkyle ou aryle.

**5.** Procédé selon la revendication 4 dans laquelle ledit composé est choisi dans le groupe constitué du :

| | |
|---|---|
| di-t-butylchlorosilane | $(CH_3)_3CHSiCl$ |
| diéthylchlorosilane | $(C_2H_5)_2HSiCl$ |
| diisopropylchlorosilane | $[(CH_3)_2CH]_2HSiCl$ |
| diméthylchlorosilane | $(CH_3)_2HSiCl$ |
| diphénylchlorosilane | $(C_6H_5)_2HSiCl$ |
| méthyléthylchlorosilane | $(CH_3)(C_2H_5)$ HSiCl |
| phénylméthylchlorosilane | $(C_6H_5)(CH_3)HSiCl$ |
| amyldichlorosilane | $(C_5H_{11})HSiCl_2$ |
| éthyldichlorosilane | $CH_3CH_2HSiCl_2$ |
| hexadécyldichlorosilane | $n\text{-}C_{16}H_{33}HSiCl_2$ |
| hexyldichlorosilane | $CH_3(CH_2)_5HSiCl_2$ |
| isobutyldichlorosilane | $i\text{-}C_4H_9HSiCl_2$ |
| méthyldichlorosilane | $CH_3HSiCl_2$ |
| phényldichlorosilane | $C_6H_5HSiCl_2$ et |
| n-propyldichlorosilane | $n\text{-}C_3H_7HSiCl_2$ |

**6.** Procédé selon la revendication 1 dans lequel l'oléfine, la dioléfine ou la cyclooléfine est choisie dans le groupe constitué de l'éthène, du propène, du 1-butène, du 2-méthylpropène, du 1-pentène, du 2-méthyl-1-butène, du 3-méthyl-1-butène, du 1-hexène, du 2-méthyl-1-pentène, du 3-méthyl-1-pentène, du 4-méthyl-1-pentène, du 1-heptène, du 2-méthyl-1-hexène, du 1-octène, du 2-méthyl-1-heptène, du 1-nonène, du 1-décène, du 1-undécène, du 1-dodécène, du 1-tridécène, du 1-tétradécène, du 1-pentadécène, du 1-hexadécène, du 1-octadécène, du 1-nonadécène, du 1-eicosène, de fractions d'alpha-oléfines contenant des alpha-oléfines $C_{22}$-$C_{30}$+, du 1,3-butadiène, du 1,4-pentadiène, de l'isoprène, du 1,5-hexadiène, du 1,6-heptadiène, du 1,7-octadiène, du 1,8-nonadiène, du 1,9-décadiène, du 1,11-dodécadiène, du 1,13-tétradécadiène, du 1,19-eicosadiène, du cyclopropène, du cyclobutène, du cyclopentène, du cyclohexène, du cyclopentadiène $C_5H_6$, du cyclooctatétraène $C_8H_8$, du 2-méthyl-2-butène, du méthyléthyléthylène non symétrique, du 2-pentène, du 2-hexène, du 2,5-diméthyl-2-hexène, du 5,5-diméthyl-2-hexène, du styrène, du divinylbenzène, de l'allylbenzène et du 1-phénylbutadiène.

7. Procédé selon la revendication 1 dans lequel le catalyseur d'hydrosilation est l'acide chloroplatinique.

8. Polymère en feuille ou en tube d'organopolysiloxane qui peut être préparé par le procédé défini dans l'une quelconque des revendications 1 à 7.